# EUROPÄISCHE PATENTSCHRIFT

(11) **EP 1 369 183 B1**
(45) Veröffentlichungstag und Bekanntmachung des Hinweises auf die Patenterteilung: **02.12.2009**
(21) Anmeldenummer: 03011863.2
(22) Anmeldetag: 26.05.2003
(51) Int. Cl.: B05B 12/14, B05B 5/16

(54) **Verfahren und System zur Farbversorgung einer elektrostatischen Beschichtungsanlage**
Method and paint supply system for an electrostatic coating station
Méthode et système d'alimentation de peinture pour une installation de revêtement électrostatique

(30) Priorität: 27.05.2002 DE 10223498
(43) Veröffentlichungstag der Anmeldung: 10.12.2003
(73) Patentinhaber: Dürr Systems GmbH, 70435 Stuttgart (DE)
(72) Erfinder: Giuliano, Stefano, 70839 Gerlingen (DE); Melcher, Rainer, 71720 Oberstenfeld (DE)
(74) Vertreter: Heusler, Wolfgang

(56) Entgegenhaltungen:
- DE-A1- 19 962 220
- US-A1- 2001 047 755

## Beschreibung

Die Erfindung betrifft ein Verfahren und ein Versorgungssystem zur Farbversorgung einer elektrostatischen Beschichtungsvorrichtung mit Beschichtungsmaterial wechselnder Farbe gemäß dem Oberbegriff der unabhängigen Patentansprüche.

Bei der elektrostatischen Beschichtung von Werkstücken wie z.B. Fahrzeugkarossen mit Direktaufladung eines leitfähigen Beschichtungsmaterials wie Wasserlack im Sprühkopf des Zerstäubers besteht das seit vielen Jahren bekannte Problem der Potentialtrennung zwischen dem auf Hochspannung liegendem Sprühkopf und dem geerdeten Teil des Versorgungssystems.

Die ersten nennenswerten Versuche zur Lösung dieses Problems sind in der GB 884944 beschrieben. Demnach verwendete man einen mit der Sprühvorrichtung verbundenen ständig auf Hochspannung liegenden Vorratsbehälter, zu dessen Nachfüllung drei unterschiedliche Möglichkeiten angegeben werden: Tropfenweise über eine zur Isolierung ausreichend große Luftstrecke (später häufig als Raindrop-Prinzip bezeichnet), oder mit einem zwischen dem geerdeten Versorgungssystem und dem Vorratsbehälter hinund herbeweglichen, abwechselnd auf Erd- und Hochspannungspotential liegenden Zwischenbehälter, oder mit einem feststehenden zwischenbehälter, der vom Versorgungssystem und vom Vorratsbehälter ausreichende Abstände hat, mit diesen aber durch bewegliche Füllrohre verbindbar ist. Von diesen Vorschlägen wurde zunächst vor allem das Raindrop-Prinzip weiterverfolgt (US 3 934 055, DE 29 37 890). Eine auch in der Praxis in vielen Anlagen realisierte Weiterentwicklung der Alternativmöglichkeiten mit beweglichem Zwischenbehälter bzw. feststehendem Zwischenbehälter und beweglichen Füllrohren ist in der DE 29 00 660 beschrieben. Eine Abwandlung des Zwischenbehälterprinzips mit bewegbaren Füllelementen, bei der die beiden für kontinuierlichen Betrieb ohne Abschaltung der Hochspannung der erforderlichen Behälter oder - bei Abschaltung der Hochspannung - nur ein Zwischenbehälter durch bewegbare, abwechselnd miteinander verbundene und voneinander getrennte Schnellkupplungselemente befüllt oder entleert bzw. isoliert werden, ist in der US 4 313 475 beschrieben.

Um beim automatischen Nachfüllen mit Zwischenbehältern auftretende Schwierigkeiten zu vermeiden, wurden ferner Systeme mit relativ großen elektrisch vollständig isolierten Vorratsbehältern entwickelt, die nach Abschalten der Hochspannung befüllt werden können (US 3 929 286).

Da in der Praxis weder das Raindrop-Prinzip noch die erwähnten Alternativmöglichkeiten der Verwendung bewegbarer Zwischenbehälter oder Füllrohre oder bewegbarer Kupplungen befriedigen konnten, suchte man nach völlig anderen Lösungen. Eine an sich brauchbare Lösung ist die Isolierung von Zwischenbehältern durch wechselweises Entleeren und Trocknen der Leitungen vor und hinter dem Zwischenbehälter, wie in der EP 0 292 778 beschrieben ist. Dieser Gedanke war teilweise, nämlich nur für die Isolierung zwischen einem isolierten Zwischenbehälter und der Sprühvorrichtung, schon in der DE 30 14 221 vorgeschlagen worden und wurde auch später weiterverfolgt (EP 0 640 017). In neuerer Zeit wurde dieses Prinzip unter Anwendung der Molchtechnik weiterentwickelt (DE 199 61 270, DE 100 33 987). Die Molchtechnik ist auch für die sog. Push-in- und Push-out-Verfahren vorteilhaft, bei denen zur Vermeidung von Farbverlusten bei Beschichtungsende in der zu dem Zerstäuber führenden Leitung verbliebenes Farbmaterial in das Farbversorgungssystem zurückgedrückt wird bzw. vor Beschichtungsende z.B. der Farbwechsler gesperrt wird, wenn sich in der Leitung gerade noch die für die Vollendung des Beschichtungsvorgangs benötigte Farbmenge befindet (DE 197 09 988, DE 197 42 588 usw.).

Ein anderer, in neuerer Zeit auch in der Praxis realisierter Weg zur Potentialtrennung ist die Verwendung auswechselbarer oder nachfüllbarer Behälter, die am oder im Zerstäuber angeordnet und im Betrieb von dem Versorgungssystem abgekoppelt sind (EP 0 796 664, EP 0 693 319, EP 0 967 016).

US 2001/047755 A1 offenbart ein System zum Transport von elektrisch leitfähigem Lack wählbarer Farbe von einer auf Erdpotenzial befindlichen Stelle zu einem Lackapplikator, der sich auf Hochspannungspotenzial befindet. Die jeweils benötigte Menge des vorgegebenen Lacks wird an der auf Erdpotenzial befindlichen Stelle, die als Ladestation dient, in eine Kartusche abgefüllt, die dann durch ein elektrisch isolierendes Rohrsystem pneumatisch zu dem Applikator gefördert und mit ihm verbunden wird. Die nach dem Lackiervorgang vollständig oder teilweise geleerte Kartusche wird pneumatisch zu der auf Erdpotenzial befindlichen Stelle zurückgefördert, worauf eine weitere Kartusche zu dem Lackapplikator gefördert werden kann.

DE 199 62 220 A1 beschreibt ein Farbwechselsystem für eine Lackieranlage mit konzentrisch um eine Mittelachse verteilten, an die verschiedenen Farbleitungen angeschlossenen Andockventilen, an die ein mit dem Lackapplikator verbundenes, um die Mittelachse drehbares Abnehmerventil angekuppelt wird.

Hiervon ausgehend liegt der Erfindung die Aufgabe zugrunde, ein Verfahren bzw. Versorgungssystem anzugeben, die die Anordnung der Potentialtrenneinrichtung an einem beliebigen Ort und insbesondere auch außerhalb der Kabine ermöglichen, ohne dass relativ hohe Farb- und Spülmittelverluste in den zu den Zerstäubern führenden u.U. relativ langen Farbleitungen in Kauf genommen werden müssen.

Diese Aufgabe wird durch die Merkmale der Patentansprüche gelöst.

Das erfindungsgemäße Verfahren bzw. Versorgungssystem hat den Vorteil einer wenig aufwendigen, außerhalb der Lackierkabine problemlos zugänglich montierbaren Potentialtrenneinheit, die aufgrund ihres einfachen modularen Aufbaus universell z.B. für unterschiedliche Dosiersysteme verwendbar ist und auch für nicht elektrostatische Sprühvorrichtungen wie z.B. Luftzerstäuber sinnvoll sein kann. Im Fall elektrostatischer Sprühvorrichtungen wird eine besonders zweckmäßige Potentialtrennmöglichkeit für die u.a. hinsichtlich der Farbwechselverluste vorteilhafte Reflow- und/oder Push-out-Technik geschaffen. Auch die zu dem Zerstäuber führende Schlauchleitungsanordnung kann einfacher und leichter sein als bei vergleichbaren bekannten Systemen. Durch das A/B-System ist kontinuierliches Lackieren möglich.

Vorzugsweise befindet sich die Potentialtrenneinrichtung in einem geschlossenen Gehäuse, das außerhalb der Lackierkabine in der Nähe ihrer Wand angeordnet ist. Neben der besseren Zugänglichkeit der Potentialtrenneinheit und der einfachen Möglichkeit eines schnellen Teil- oder Komplettaustauschs vermeidet diese Anordnung auch eine Verschmutzung der Kabine durch Arbeiten an der Potentialtrenneinheit. Gegenüber einer an sich ebenfalls möglichen Montage der Farbbehälter und/oder sonstiger Teile der Potentialtrenneinheit auf dem Arm eines Lackierroboters ergibt sich ferner der Vorteil geringerer Belastung und Bemessung des Roboterarms und somit besserer Dynamik und besserer Zugänglichkeit zu beschichtender Werkstückbereiche, etwa bei der Innenlackierung von Fahrzeugkarossen.

An den in der Zeichnung dargestellten Ausführungsbeispielen wird die Erfindung näher erläutert. Es zeigen
- Fig. 1: ein Ausführungsbeispiel mit in der Potentialtrenneinheit linear verschiebbaren Farbbehältern;
- Fig. 2: ein abgewandeltes Ausführungsbeispiel mit einer gemeinsamen Handhabungsvorrichtung für verschiedene Farbbehälter;
- Fig. 3 und Fig. 4: ein Ausführungsbeispiel mit in Bezug auf eine größere Anzahl von Farbleitungen um eine zentrale Achse drehbaren Farbbehältern.

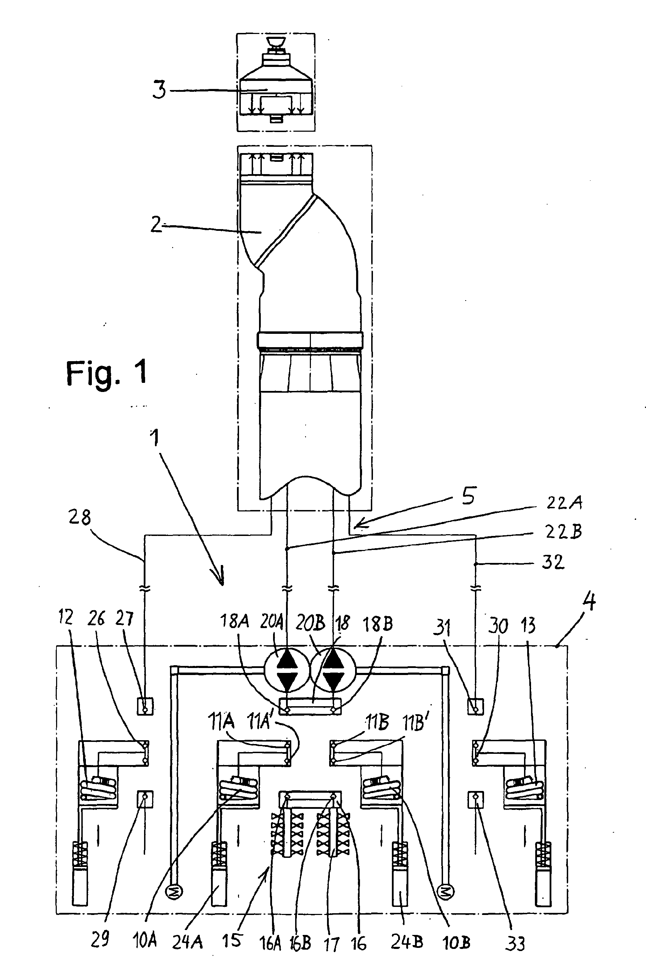

In Fig. 1 ist ein Farbversorgungssystem 1 für eine Beschichtungsvorrichtung dargestellt, die bei dem dargestellten Beispiel aus einem am Handgelenk 2 eines Lackierroboters oder einer sonstigen Beschichtungsmaschine montierten elektrostatischen Rotationszerstäuber 3 besteht. Der Zerstäuber kann lösbar und auswechselbar an dem Handgelenk montiert sein. Das Versorgungssystem 1 besteht im wesentlichen aus einer vorzugsweisen außerhalb der Lackierkabine, aber in deren Nähe angeordneten Potentialtrenneinheit 4 und einer ein Schlauchpaket bildenden Leitungsanordnung 5, die aus der Potentialtrenneinheit 4 in die Kabine und durch das Handgelenk 2 zu dem Zerstäuber 3 führt.

Die Potentialtrenneinheit 4 ist vorzugsweise als modulartige Baueinheit ausgebildet und beispielsweise in einem an der Kabinenwand positionierten hochspannungsisolierten schrankartigen Gehäuse untergebracht, das aus den bekannten Explosionsschutzgründen druckbelüftet sein kann. Die Einheit 4 enthält mindestens zwei Farbvorratsbehälter 10A, 10B, die nach dem an sich bekannten A/B-Prinzip (EP 0 292 778, DE 100 33 987 usw.) einander abwechselnd den Zerstäuber 3 versorgen, einen Vorratsbehälter 12 für Verdünner oder ein sonstiges Spülmittel und einen Zwischenbehälter 13 für ein Rückführungssystem für zu entsorgendes Spülmittel und Farbmaterial. Ferner enthält die Einheit 4 eine geerdete Farbversorgungseinrichtung 15, die bei dem dargestellten Beispiel aus zwei parallel an eine Andockventileinheit 16 mit zwei Andockventilen 16A, 16B angebauten Farbwechselventilblöcken 17 (Farbwechsler) besteht. Auf der Hochspannungsseite enthält die Potentialtrenneinheit 4 eine weitere Andockventileinheit 18 mit zwei Andockventilen 18A, 18B, die bei diesem Beispiel über je eine mit ihren Antriebsmotoren M ebenfalls in der Potentialtrenneinheit 4 befindliche Dosierpumpe 20A bzw. 20B an je einen in der Leitungsanordnung 5 enthaltenen hochspannungsisolierten molchbaren Schlauch 22A bzw. 22B angeschlossen sind.

Erfindungsgemäß sollen die Farbbehälter 10A und 10B über trennbare Leitungskupplungen mit voneinander unter jeweiliger Bildung einer elektrischen Isolierstrecke entfernbaren Kupplungsteilen wahlweise an den betreffenden molchbaren Schlauch 22A bzw. 22B und an die Farbversorgungseinrichtung 15 ankuppelbar und von ihr abkuppelbar sein. Zu diesem Zweck sind die Behälter jeweils mit zwei Andockventilen 11A, 11A' bzw. 11B, 11B' verbunden und von je einem in der Einheit 4 enthaltenden Linearantrieb 24A bzw. 24B zwischen einer Hochspannungsposition, in der sie an die betreffende Dosierpumpe 20A bzw. 20B angekuppelt sind, und einer Erdpotentialposition, in der sie an die Farbversorgungseinrichtung 15 angekuppelt sind, hin- und herbewegbar. In der Hochspannungsposition sind die Ventile 11A bzw. 11B an die Ventile 18A bzw. 18B angekuppelt, während in der Erdpotialposition die Ventile 11A' bzw. 11B' an die Ventile 16A bzw. 16B angekuppelt sind.

In ähnlicher Weise sind auch der Vorratsbehälter 12 und der Zwischenbehälter 13 darstellungsgemäß mit Andockventilen 26 bzw. 30 verbunden und von Linearantrieben zwischen Hochspannungs- und Erdpotentialpositionen hin- und herbewegbar. In der Hochspannspannungsposition sind ihre Andockventile 26 bzw. 30 an entsprechende Ventile 27 bzw. 31 angekuppelt, die an in der Leitungsanordnung 5 enthaltene Spül- bzw. Rückführungsleitungen 28 bzw. 32 angeschlossen sind, während die Behälter 12, 13 in der Erdposition an geerdete Ventile 29 bzw. 23 mit entsprechenden nach außen führenden Anschlußleitungen angedockt sind.

Grundsätzlich sollen sich die Molchstationen der gemolchten Leitungen 22A, 22B am einen Leitungsende so nahe wie möglich an der Farbdüse des Zerstäubers und am anderen Leitungsende so nahe wie möglich am Versorgungsbehälter befinden. Bei dem in Fig. 1 dargestellten Beispiel können die Quellstationen an den Dosierpumpen 20A, 20B in der Einheit 4 und die Zielstationen beispielsweise gemäß DE 101 57 938 unmittelbar am Ende des Farbrohrs des Zerstäubers angeordnet sein. Wenn in anderen Fällen die Beschichtungsmasche oder der Zerstäuber selbst Dosierpumpen enthält, werden die Quellstationen der Molche vorzugsweise in die die ortsfesten Andockventile 18A, 18B enthaltende Ventileinheit integriert. Es ist auch denkbar, die beschriebenen Leitungskupplungen molchbar auszubilden.

Optional kann die Potentialtrenneinheit 4 auch einen Hochspannungserzeuger und/oder weitere für den Betrieb des Zerstäubers notwendigen Bauteile wie z.B. O/.E-Wandler und Sensoren usw. enthalten.

Die gesamte Potentialtrenneinheit 4 kann entfernbar und auswechselbar angeordnet und zu diesem Zweck mit den externen hochspannungs- und erdpotentialseitigen Leitungen über außerhalb des Gehäuses der Potentialtrenneinheit angeordnete, ggf. molchbare Leitungskupplungen verbunden sein.

Darstellungsgemäß kann es sich bei den Farbvorratsbehältern 10A, 10B zweckmäßig um molchbare Schlauchspiralen handeln (vgl. DE 10 115 463). Sie könnten aber in an sich bekannter Weise auch als Dosierzylinder ausgebildet sein (z.B. entsprechend DE 102 33 633 und EP 03 010 194.3), ggf. mit ovalem Querschnitt. Bei Verwendung von Dosierzylindern kann in manchen Fällen auf eine zusätzliche Dosierpumpe verzichtet werden.

Das in Fig. 1 dargestellte System kann nach dem an sich bekannten "Push-in"- oder Reflow-Prizip arbeiten, bei dem sich die bei einem Farbwechsel noch im Leitungssystem zwischen dem Zerstäuber und dem Farbwechsler befindende Lackmenge nicht über ein Rückführungsventil entsorgt wird, sondern mittels eines Molches in das Versorgungssystem zurückgefördert wird. Im Betrieb wird also bei eingeschalteter Hochspannung der jeweils verwendete Farbbehälter zunächst zum Befüllen mit leitfähigem Beschichtungsmaterial an die geerdete Farbversorgungseinheit 15 angedockt, während er durch die erwähnte Isolierstrecke von der hochspannungsseitigen Ventileinheit 18 isoliert ist. Anschließend wird er für den Beschichtungsbetrieb von dem Linearantrieb 24A bzw. 24B von der Ventileinheit 18 weg bewegt und an die Ventileinheit 18 angedockt. In der selben Position kann nach Beschichtungsende das nicht versprühte Beschichtungsmaterial in den Farbbehälter zurückgedrückt werden. Nach erneutem Andocken des Farbbehälters an die Farbversorgungseinheit 15 kann sein Inhalt in das externe Farbversorgungssystem und ggf. bis in die Ringleitung zurückgefördert werden.

Das hier beschriebene System eignet sich auch für das ebenfalls an sich bekannte Push-out-Prinzip, das darin besteht, nur so viel Beschichtungsmaterial in die Farbbehälter 10A, 10B bzw. in die Leitungen 22A, 22B einzufüllen, wie für den betreffenden Beschichtungsvorgang benötigt wird, zuzüglich eines je nach Anwendungsfall erforderlichen Sicherheitsreservevolumens. Bei Erreichen der notwendigen Lackmenge wird automatisch ein Molch in das System eingeschleust, der mit Hilfe eines Schiebemediums den im System befindlichen Lack zum Zerstäuber fördert.

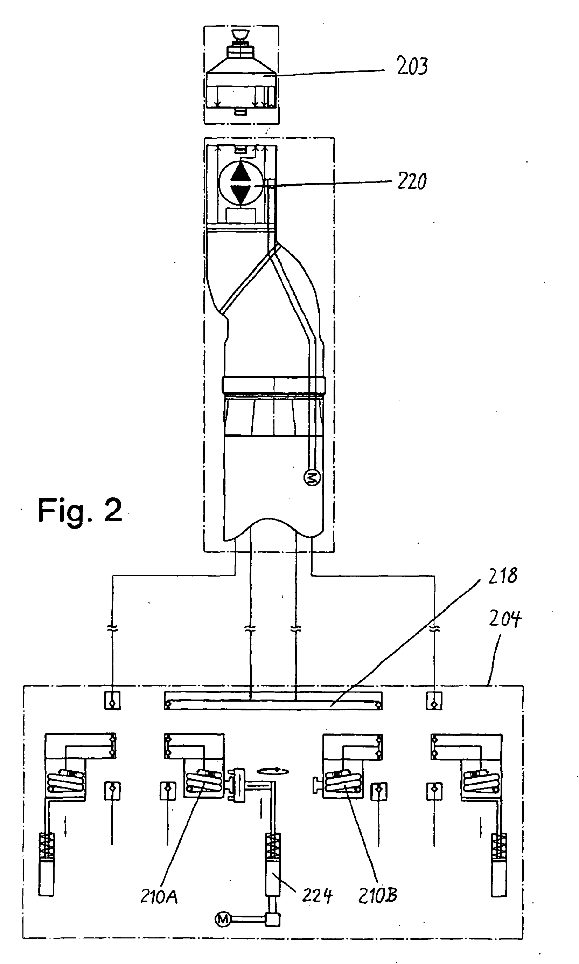

Fig. 2 zeigt ein abgewandeltes Ausführungsbeispiel, das sich von Fig. 1 zunächst dadurch unterscheidet, dass die Potentialtrenneinrichtung 204 keine Dosierpumpen enthält, sondern eine den A- und B-Kreisen gemeinsame Dosierpumpe 220 unmittelbar am Zerstäuber 203 angeordnet ist. Ferner sind die beiden an die zerstäuberseitige Ventileinheit 218 ankuppelbaren Farbvorratsbehälter 210A, 210B linear von einer ihnen gemeinsamen Handhabungsvorrichtung 224 verschiebbar, die zwischen ihnen hin- und her drehbar ist und sich ebenfalls in der Potentialtrenneinheit 204 befindet.

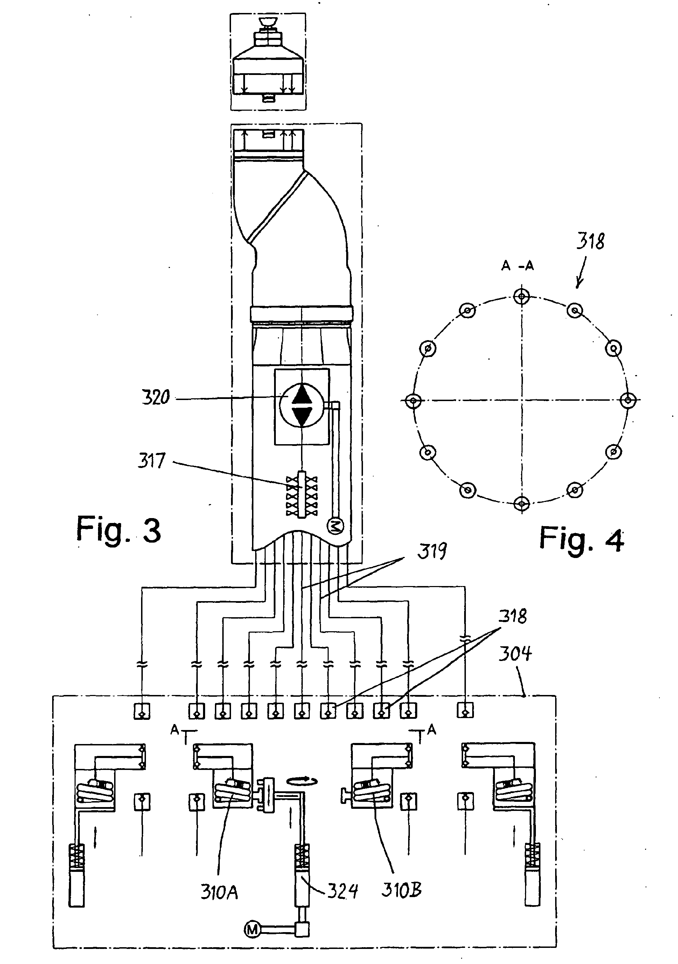

Eine Weiterbildung ist in Fig. 3 dargestellt. Hier werden Farbvorratsbehälter 310A, 310B wie in Fig.2 von einer ihnen gemeinsamen Handhabungsvorrichtung 324 in der Potentialtrenneinheit 304 zwischen den Andockventilen des geerdeten Versorgungssystems und der hochspannungsseitigen gemolchten Leitungen hin und her bewegt. Als Erweiterung dieses Systems sind häufig benötigten Farben ("Highrunner") mindestens je ein eigener, vorzugsweise zwei zusätzliche (nicht dargestellte) Behälter fest zugeordnet, die innerhalb der Einheit 304 beispielsweise von der Handhabungsvorrichtung 324 zwischen den Andockventilen 318 einer entsprechenden Anzahl von diesen Farben zugeordneten in die Beschichtungsmaschine führenden Leitungen 319 und geerdeten, zweckmäßig direkt an die betreffenden Ringleitungen angeschlossenen Andockventilen hin und her bewegbar sind. Die hochspannungsseitigen Leitungen 319 können zu einem in der Beschichtungsmachine befindlichen Farbwechsler 317 mit nachgeschalteter Dosierpumpe 320 führen. Die Behälter können von der Handhabungsvorrichtung 324 längs einer Kreisbahn geschwenkt werden, um an gemäß Fig. 4 auf diesem Kreis verteilte Andockventile 318 angekuppelt zu werden.

## Patentansprüche

1. Verfahren zur Farbversorgungeiner elektrostatischen Beschichtungsvorrichtung (3) mit Beschichtungsmaterial wechselnder Farbe,
bei dem das Beschichtungsmaterial der Beschichtungsvorrichtung (3) in dosierter Menge zugeführt wird, wobei es von einem Farbbehälter (10A, 10B) in einer entfernten, in einem geschlossenen Gehäuse befindlichen Potentialtrenneinheit (4) kommend, die an eine auf Erdpotential liegende Farbversorgungseinrichtung (15) angeschlossen ist, durch eine molchbare Verbindungsleitungsanordnung (22A. 22B) zu der Beschichtungsvorrichtung (3) fließt, und bei dem das Beschichtungsmaterial in der Verbindungsleitungsanordnung von einem Molch in Richtung zu der Beschichtungsvorrichtung und/oder zurück in Richtung zu der Farbversorgungseinrichtung gedrückt wird,
wobei in der Potentialtrenneinheit (4) zwei Farbbehälter (10A, 10B) einander abwechselnd jeweils an die Farbversorgungseinrichtung (15) angekuppelt und befüllt werden, während sie von je einer zu der Beschichtungsvorrichtung (3) führenden molchbaren Verbindungsleitung (22A, 22B) abgekuppelt und unter Bildung einer elektrischen Isolierstrecke entfernt sind,
und zum Entleeren an ihre molchbare Verbindungsleitung (22A, 22B) angekuppelt werden, während sie von der Farbversorgungseinrichtung (15) abgekuppelt und unter Bildung einer elektrischen Isolierstrecke entfernt sind,
**dadurch gekennzeichnet, daß** die Farbbehälter (10A, 10B) jeweils von einer Handhabungsvorrichtung (24A, 24B) innerhalb der Potenzialtrenneinheit (4) zwischen ihren Ankuppelpositionen hin- und herbewegt werden.

2. Verfahren nach Anspruch 1, **dadurch gekennzeichnet, dass** in der Potentialtrenneinheit (4) ein Spülmittelbehälter (12) aus einem auf Erdpotential liegenden Spülmittelversorgungssystem (29) gefüllt wird, während er von einer zu der Beschichtungsvorrichtung (3) führenden Verbindungsleitung (28), abgekuppelt und unter Bildung einer elektrischen Isolierstrecke entfernt ist, und dass der Spülmittelbehälter (12) zum Entleeren an seine Verbindungsleitung (28) angekuppelt wird, während er von seinem Versorgungssystem abgekuppelt und unter Bildung einer elektrischen Isolierstrecke entfernt ist.

3. Verfahren nach Anspruch 1 oder 2, **dadurch gekennzeichnet, dass** in der Potentialtrenneinheit (4) ein Rückführungsbehälter (13) für von der Beschichtungsvorrichtung (3) durch eine Verbindungsleitung (32) zurückgeleitete Medien an diese Verbindungsleitung (32) angekuppelt und gefüllt wird, während er von einem auf Erdpotential liegenden Rückführungssystem (33) abgekoppelt und unter Bildung einer elektrischen Isolierstrecke entfernt ist, und dass der Rückführungsbehälter (13) zum Entleeren an das geerdete Rückführungssystem (33) angekoppelt wird, während er von seiner Verbindungsleitung (32) abgekuppelt und unter Bildung einer elektrischen Isolierstrecke entfernt ist.

4. Verfahren nach Anspruch 2 oder 3, **dadurch gekennzeichnet, dass** die Spülmittel- und/oder Rückführungsbehälter (12, 13) jeweils von einer Handhabungsvorrichtung zwischen ihren Ankuppelpositionen hin- und herbewegt werden.

5. Verfahren nach einem der vorangehenden Ansprüche, **dadurch gekennzeichnet, dass** nach einem Beschichtungsvorgang in der Verbindungsleitung (22A, 22B) und/oder in der Beschichtungsvorrichtung (3) verbliebenes Beschichtungsmaterial in den an die Verbindungsleitung angekuppelten Farbbehälter (10A, 10B)zurückgemolcht oder zurückgedrückt wird.

6. Verfahren nach einem der vorangehenden Ansprüche, **dadurch gekennzeichnet, dass** nur die für einen Beschichtungsvorgang erforderliche Materialmindestmenge bei an die Farbversorgungseinrichtung angekoppeltem Farbbehälter in diesen und/oder bei an die Verbindungsleitung angekuppelten Farbbehälter in die Verbindungsleitung geleitet wird.

7. Verfahren nach einem der vorangehenden Ansprüche, **dadurch gekennzeichnet, dass** mindestens ein Farbbehälter (310A, 310B) um eine in Bezug auf eine Mehrzahl von kreisförmig angeordneten ortsfesten Andockventilen (318) zentrale Achse geschwenkt und wahlweise an eine von mehreren Verbindungsleitungen angekuppelt wird.

8. Versorgungssystem zur Farbversorgung einer elektrostatischen Beschichtungsvorrichtung (3) mit Beschichtungsmaterial wechselnder Farbe,
mit einer von der Beschichtungsvorrichtung entfernten, in einem geschlossenen Gehäuse befindlichen automatisch gesteuerten Potentialtrenneinheit (4), die eine an eine Farbversorgungseinrichtung (15) angeschlossene und mit der Beschichtungsvorrichtung (3) durch eine molchbare Farbleitungsanordnung (22A, 22B) verbundene Farbbehälteranordnung (10A, 10B) enthält,
**dadurch gekennzeichnet, dass** in der Potentialtrenneinheit (4) mindestens zwei Farbbehälter (10A, 10B) vorgesehen sind, die über trennbare Leitungskupplungen (11, 16, 18) mit voneinander unter Bildung einer elektrischen Isolierstrecke entfernbaren Kupplungsteilen wahlweise an je eine zu der Beschichtungsvorrichtung (3) führende molchbare Farbleitung (22A, 22B) und an die Farbversorgungseinrichtung (15) ankuppelbar und von ihnen abkuppelbar sind,
wobei die Farbbehälter (10A, 10B) jeweils von einer Handhabungsvorrichtung (24A, 24B) innerhalb der Potenzialtrenneinheit (4) zwischen ihren Ankuppelpositionen hin- und herbewegt werden.

9. Versorgungssystem nach Anspruch 8, **dadurch gekennzeichnet, dass** die Potentialtrenneinheit (4) einen bewegbaren Vorratsbehälter (12) für ein Spülmittel und/oder einen bewegbaren Zwischenbehälter (13) für die Rückführung von zu entsorgendem Beschichtungsmaterial und/oder Spülmittel enthält, der unter Bildung elektrischer Isolierstrecken wahlweise an ein ortsfestes geerdetes Ventil (29, 33) oder an eine zu der Beschichtungsvorrichtung (3) führende Leitung (28, 32) ankuppelbar ist.

10. Versorgungssystem nach Anspruch 8 oder 9, **dadurch gekennzeichnet, dass** die Potentialtrenneinheit (4) eine an die molchbare Farbleitung (22A, 22B) angeschlossene Molchstation enthält, an die der bewegbare Farbbehälter (10A, 10B) ankuppelbar ist.

11. Versorgungssystem nach einem der Ansprüche 8 bis 10,
**dadurch gekennzeichnet, dass** die Potentialtrenneinheit (4) einen Farbwechselventilblock (17) enthält, an den der bewegbare Farbbehälter (10A, 10B) ankuppelbar ist.

12. Versorgungssystem nach einem der Ansprüche 8 bis 11,
**dadurch gekennzeichnet, dass** die Potentialtrenneinheit (4) mehrere Farbvorratsbehälter enthält, die jeweils einem Beschichtungsmaterial häufig benötigter Farbe zugeordnet sind.

13. Versorgungssystem nach einem der Ansprüche 8 bis 12,
**dadurch gekennzeichnet, dass** sich die Potentialtrenneinrichtung (4) in einem geschlossenen Gehäuse befindet, das außerhalb der Lackierkabine in der Nähe ihrer Wand angeordnet ist.

## Claims

1. A method of supplying an electrostatic coating device (3) with coating material of different colours,
in which the coating material is fed to the coating device (3) in a metered quantity, it flowing from a paint receptacle (10A, 10B) in a remote potential insulation unit (4) located in a closed housing, which unit is connected to a paint supply means (15) at earth potential, through a piggable connection line arrangement (22A, 22B) to the coating device (3), and in which the coating material in the connection line arrangement is pushed by a pig towards the coating device and/or back towards the paint supply means,
two paint receptacles (10A, 10B) being coupled in the potential insulation unit (4) alternately in each case to the paint supply means (15) and filled, while they are in each case uncoupled from a piggable connection line (22A, 22B) leading to the coating device (3) and separated therefrom, so forming an electrical insulating path,
and for emptying purposes being coupled to their piggable connection line (22A, 22B), while they are uncoupled from the paint supply means (15) and separated therefrom, so forming an electrical insulating path,
**characterized in that** the paint receptacles (10A, 10B) are in each case moved to-and-fro by a handling device (24A, 24B) within the electrical isolating unit (4) between their coupling positions.

2. The method according to claim 1, **characterized in that** in the potential insulation unit (4) a flushing agent receptacle (12) is filled from a flushing agent supply system (29) at earth potential, while it is uncoupled from a connection line (28) leading to the coating device (3) and separated therefrom, so forming an electrical insulating path, and **in that** the flushing agent receptacle (12) is coupled for emptying purposes to its connection line (28), while it is uncoupled from its supply system and separated therefrom, so forming an electrical insulating path.

3. The method according to claim 1 or claim 2, **characterized in that** in the potential insulation unit (4) a return receptacle (13) for media fed back from the coating device (3) through a connection line (32) is coupled to this connection line (32) and filled while it is uncoupled from a return system (33) at earth potential and separated therefrom, so forming an electrical insulating path, and **in that** the return receptacle (13) is coupled for emptying purposes to the earthed return system (33) while it is uncoupled from its connection line (32) and separated therefrom, so forming an electrical insulating path.

4. The method according to claim 2 or claim 3, **characterized in that** the flushing agent and/or return receptacle (12, 13) are in each case moved to-and-fro between their coupling positions by a handling device.

5. The method according to any one of the preceding claims, **characterized in that**, after a coating process, coating material remaining in the connection line (22A, 22B) and/or in the coating device (3) is pigged or pushed back into the paint receptacle (10A, 10B) coupled to the connection line.

6. The method according to any one of the preceding claims, **characterized in that** only the minimum quantity of material needed for a coating process is conveyed into the paint receptacle when the latter is coupled to the paint supply means and/or into the connection line when the paint receptacle is coupled to the connection line.

7. The method according to any one of the preceding claims, **characterized in that** at least one paint receptacle (310A, 310B) is swivelled about an axis central relative to a plurality of circularly arranged stationary docking valves (318) and is selectively coupled to one of a plurality of connection lines.

8. A supply system for supplying an electrostatic coating device (3) with coating material of different colours,
having an automatically controlled potential insulation unit (4) remote from the coating device and located in a closed housing, which unit contains a paint receptacle arrangement (10A, 10B) connected to a paint supply means (15) and connected to the coating device (3) by a piggable paint line arrangement (22A, 22B),
**characterized in that** in the potential insulation unit (4) at least two paint receptacles (10A, 10B) are provided, which may selectively, via separable connection couplings (11, 16, 18) having coupling parts separable from one another, so forming an electrical insulating path, be coupled to and uncoupled from a respective piggable paint line (22A, 22B) leading to the coating device (3) and the paint supply means (15),
the paint receptacles (10A, 10B) being in each case moved to-and-fro by a handling device (24A, 24B) within the electrical isolating unit (4) between their coupling positions.

9. The supply system according to claim 8, **characterized in that** the potential insulation unit (4) includes a movable reservoir (12) for a flushing agent and/or a movable intermediate receptacle (13) for the return of coating material and/or flushing agent to be disposed of, which may be coupled selectively to a stationary, earthed valve (29, 33) or to a line (28, 32) leading to the coating device (3), so forming electrical insulating paths.

10. The supply system according to claim 8 or claim 9, **characterized in that** the potential insulation unit (4) includes a pig station connected to the piggable paint line (22A, 22B), to which pig station the movable paint receptacle (10A, 10B) may be coupled.

11. The supply system according to any one of claims 8 to 10, **characterized in that** the potential insulation unit (4) includes a colour change valve block (17), to which the movable paint receptacle (10A, 10B) may be coupled.

12. The supply system according to any one of claims 8 to 11, **characterized in that** the potential insulation unit (4) includes a plurality of paint reservoirs, which are in each case assigned to a coating material of a frequently required colour.

13. The supply system according to any one of claims 8 to 12, **characterized in that** the potential insulation means (4) is located in a closed housing, which is arranged outside the painting booth in the vicinity of the wall thereof.

## Revendications

1. Procédé destiné à acheminer un matériau de revêtement avec une alternance de couleur vers un dispositif de revêtement (3) électrostatique,
dans lequel le matériau de revêtement est acheminé en quantités dosées vers le dispositif de revêtement (3), en circulant à partir d'un réservoir de peinture (10A, 10B) monté dans une unité de séparation de potentiel (4) éloignée, située dans un caisson fermé et raccordée à un dispositif de distribution de peinture (15) mis au potentiel de la terre, à travers un système de conduites de liaison (22A, 22B), aptes à recevoir un racleur, vers le dispositif de revêtement (3), et dans lequel le matériau de revêtement est poussé par un racleur dans le système de conduites de liaison vers le dispositif de revêtement et/ou en retour vers le dispositif de distribution de peinture,
sachant que, dans l'unité de séparation de potentiel (4), deux réservoirs de peinture (10A, 10B) sont raccordés en alternance chacun au dispositif de distribution de peinture (15) et sont remplis alors qu'ils sont détachés respectivement d'une conduite de liaison (22A, 22B), pouvant recevoir un racleur et menant vers le dispositif de revêtement (3), et sont éloignés en formant une distance d'isolation électrique,
et, en vue de leur vidage, sont raccordés à leur conduite de liaison (22A, 22B) respective, apte à recevoir un racleur, alors qu'ils sont détachés du dispositif de distribution de peinture (15) et sont éloignés en formant une distance d'isolation électrique,
**caractérisé en ce que** les réservoirs de peinture (10A, 10B) sont déplacés en va-et-vient entre leurs positions de raccordement chacun par un dispositif de manutention (24A, 24B) à l'intérieur de l'unité de séparation de potentiel (4).

2. Procédé selon la revendication 1, **caractérisé en ce que**, dans l'unité de séparation de potentiel (4), un réservoir de détergent (12) est rempli à partir d'un système de distribution de détergent (29), mis au potentiel de la terre, alors qu'il est détaché d'une conduite de liaison (28) menant vers le dispositif de revêtement (3), et est éloigné en formant une distance d'isolation électrique, et **en ce que** le réservoir de détergent (12), en vue de son vidage, est raccordé à sa conduite de liaison (28) alors qu'il est détaché du système de distribution et éloigné en formant une distance d'isolation électrique.

3. Procédé selon la revendication 1 ou 2, **caractérisé en ce que**, dans l'unité de séparation de potentiel (4), un réservoir de récupération (13), destiné à recevoir des produits renvoyés depuis le dispositif de revêtement (3) à travers une conduite de liaison (32), est raccordé à ladite conduite de liaison (32) et est rempli, alors qu'il est détaché du système de récupération (33), mis au potentiel de la terre, et est éloigné en formant une distance d'isolation électrique, et ce que le réservoir de récupération (13), en vue de son vidage, est raccordé au système de récupération (33) relié à la terre, alors qu'il est détaché de sa conduite de liaison (32) et est éloigné en formant une distance d'isolation électrique.

4. Procédé selon la revendication 2 ou 3, **caractérisé en ce que** le réservoir de détergent (12) et/ou le réservoir de récupération (13) sont déplacés chacun en va-et-vient entre leurs positions de raccordement par un dispositif de manutention.

5. Procédé selon l'une quelconque des revendications précédentes, **caractérisé en ce que**, à la suite d'un processus de revêtement, le matériau de revêtement restant dans la conduite de liaison (22A, 22B) et/ou dans le dispositif de revêtement (3) est ramené par le racleur ou repoussé dans le réservoir de peinture (10A, 10B) raccordé à la conduite de liaison.

6. Procédé selon l'une quelconque des revendications précédentes, **caractérisé en ce que** seule la quantité minimale, nécessaire pour un processus de revêtement, est guidée dans le réservoir de peinture lorsque celui-ci est raccordé au dispositif de distribution de peinture et/ou est guidée dans la conduite de liaison lorsque le réservoir de peinture est raccordé à la conduite de liaison.

7. Procédé selon l'une quelconque des revendications précédentes, **caractérisé en ce qu'**au moins un réservoir de peinture (310A, 310B) est amené en pivotement autour d'un axe central par rapport à une pluralité de vannes de couplage (318) agencées en cercle et est raccordé au choix à une conduite parmi une pluralité de conduites de liaison.

8. Système de distribution destiné à acheminer un matériau de revêtement avec une alternance de couleur vers un dispositif de revêtement (3) électrostatique,
comportant une unité de séparation de potentiel (4) à commande automatique, qui est éloignée du dispositif de revêtement et est située dans un caisson fermé et qui contient un ensemble de réservoirs de peinture (10A, 10B) raccordé à un dispositif de distribution de peinture (15) et relié au dispositif de revêtement (3) par un système de conduites de peinture (22A, 22B) aptes à recevoir un racleur,
**caractérisé en ce que**, dans l'unité de séparation de potentiel (4), il est prévu au moins deux réservoirs de peinture (10A, 10B) qui, via des raccords de conduite (11, 16, 18) séparables avec des éléments de raccord aptes à être éloignés les uns des autres en formant une distance d'isolation électrique, peuvent être raccordés au choix à respectivement une conduite de peinture (22A, 22B), pouvant recevoir un racleur et menant vers le dispositif de revêtement (3), et au dispositif de distribution de peinture (15) et peuvent être détachés de ceux-ci, les réservoirs de peinture (10A, 10B) étant déplacés en va-et-vient entre leurs positions de raccordement chacun par un dispositif de manutention (24A, 24B) dans l'unité de séparation de potentiel (4).

9. Système de distribution selon la revendication 8, **caractérisé en ce que** l'unité de séparation de potentiel (4) contient un réservoir de stockage (12) mobile pour un détergent et/ou un réservoir tampon (13) mobile pour la récupération du matériau de revêtement et/ou du détergent à évacuer vers un traitement des déchets, lesquels réservoirs peuvent être raccordés en formant des distances d'isolation électrique au choix à une vanne (29, 33) fixe, reliée à la terre, ou à une conduite (28, 32) menant vers le dispositif de revêtement (3).

10. Système de distribution selon la revendication 8 ou 9, **caractérisé en ce que** l'unité de séparation de potentiel (4) contient un poste de raclage, qui est raccordé à la conduite de peinture (22A, 22B), apte à recevoir un racleur, et auquel peut être raccordé le réservoir de peinture (10A, 10B) mobile.

11. Système de distribution selon l'une quelconque des revendications 8 à 10, **caractérisé en ce que** l'unité de séparation de potentiel (4) contient un bloc de vanne de changement de couleur, auquel peut être raccordé le réservoir de peinture (10A, 10B) mobile.

12. Système de distribution selon l'une quelconque des revendications 8 à 11, **caractérisé en ce que** l'unité de séparation de potentiel (4) contient un bloc de vannes de changement de couleur (17), auquel peut être raccordé le réservoir de peinture (10A, 10B) mobile.

13. Système de distribution selon l'une quelconque des revendications 8 à 12, **caractérisé en ce que** l'unité de séparation de potentiel (4) est disposée dans un caisson fermé qui est monté en dehors de la cabine de peinture à proximité de la paroi de celle-ci.
